# EUROPEAN PATENT APPLICATION

(11) **EP 4 660 250 A1**
(43) Date of publication of application: **10.12.2025**
(21) Application number: 24749976.7
(22) Date of filing: 18.01.2024
(51) Int. Cl.: C08L 83/06, C08K 3/013, C08K 5/541, C08K 5/544, C08K 5/548

(54) **ROOM-TEMPERATURE-CURABLE SILICONE COMPOSITION**

(30) Priority: 31.01.2023 JP 2023012802
(71) Applicant: Momentive Performance Materials Japan LLC, Tokyo 107-6119 (JP)
(72) Inventor: ONO, Kazuhisa, Tokyo 107-6119 (JP); MIYATA, Koji, Tokyo 107-6119 (JP)
(74) Representative: Müller-Boré & Partner Patentanwälte PartG mbB
(86) International application number: PCT/JP2024/001279
(87) International publication number: WO 2024/162022

(57) **Abstract**

A moisture curable silicone composition comprising (A) a polyorganosiloxane having per molecule two or more hydroxyl groups or hydrolyzable groups, (B) a siloxane having two or more -OR² groups bonded to a silicon atom, (C) a condensation catalyst, (D) a silicon adhesion imparting agent which is a compound having per molecule at least one group selected from the group consisting of an aromatic hydrocarbon-containing group, an epoxy group-containing group, and a linear, branched, or cyclic aliphatic unsaturated hydrocarbon group, and having per molecule at least one heteroatom in addition to the adhesion imparting functional group, and (E) an inorganic filler. In the present invention, there is provided a moisture curable silicone composition that can achieve both satisfactory adhesive properties and permanent compression set at a low temperature in a short time when used as various sealing agents and potting materials for use in, for example, industrial parts for automobile, which are required to have high reliability.

## Description

### Field of the Invention

The present invention relates to a room-temperature curable silicone composition which is useful particularly as an adhesive.

### Background Art

A curable polyorganosiloxane composition exhibits fluidity in an uncured state and forms an elastomer (silicone rubber) after cured, and has been known as a material having excellent heat resistance, cold resistance, weathering resistance, and electrical insulating properties. The curable polyorganosiloxane composition has been used in parts, such as an O-ring, a packing, and a gasket, and an adhesive for substrates in various industrial fields. Especially, there are increasing demands for silicone adhesive with respect to metals, such as aluminum and diecast aluminum, and engineering plastics, such as PBT and PET. For meeting the demands, a silicone resin composition having added thereto a sulfur compound for improving the adhesive properties to a substrate and permanent compression set has been proposed (patent documents 1 and 2).

The curable silicone composition is classified into an addition reaction type and a condensation reaction type according to the curing mechanism. The curable silicone composition of an addition reaction type has a feature such that the composition can be cured in a short time by heating and has excellent curing properties even for a site to which water in air is not satisfactorily supplied. The curable silicone composition of a condensation reaction type has a feature such that the composition needs a long curing time, but can be cured at room temperature and exhibits excellent adhesive properties. A room-temperature curable silicone composition does not need a lot of energy for the curing conditions, and therefore functions as an adhesive that adjusts to a recent change of concern with the environment.

With respect to the (room temperature) curable polyorganosiloxane composition of a condensation reaction type, there has been proposed a curable polyorganosiloxane composition which is improved in, for example, fluidity, non-sagging properties, extrusion properties, adhesive properties, or bonding durability by incorporating thereinto an additive, such as a filler or a light stabilizer (for example, patent documents 3 and 4).

An attempt is made to use the curable silicone composition for bonding a metal member, but the moisture curable silicone composition uses titanium as a curing catalyst, and therefore has poor adhesive properties to a metal or an engineering plastic. For this reason, generally, a bonding promotor which does not inhibit the titanium catalyst is used in combination with the curable silicone composition (patent document 5).

### PRIOR ART REFERENCES

### Patent Documents

Patent document 1: Japanese Unexamined Patent Publication No. 2018-27997
Patent document 2: Japanese Patent Application prior-to-examination Publication (kohyo) No. 2018-505917
Patent document 3: Japanese Unexamined Patent Publication No. 2001-152020
Patent document 4: Japanese Unexamined Patent Publication No. 2002-302606
Patent document 5: Japanese Unexamined Patent Publication No. Sho 54-090350

### Summary of the Invention

### Problems to be Solved by the Invention

In the case of application of a sealing agent or adhesive comprising the silicone rubber composition to a metal, the durability of the adhesive is measured by a test, such as a salt spray test or a water immersion test, in view of the water resistance. Particularly, in the automotive use, the bonded portions are likely to be not only in a stringent environment which includes heating but also exposed to the weather. Further, in the automotive use, the bonded portions are expected to be in contact with an oil. For this reason, for increasing the reliability of the adhesive, the adhesive is needed to have water resistance and oil resistance performance. Desirably, the adhesive is required to be able to maintain the adhesive properties for a term as long as several years or more. However, the existing products have not yet achieved satisfactory water resistance and oil resistance properties.

Further, it has been known that an adhesive auxiliary conventionally used, such as an aminosilane, undergoes coupling with a condensation catalyst, and markedly affects a lowering of the curing properties and further adhesive properties especially when the catalyst contains a metal atom belonging to Group IV of the periodic table, such as titanium.

An object of the present invention is to provide a moisture curable silicone composition having not only high adhesive properties but also excellent water resistance, resistance to salt water, and oil resistance.

### Means for Solving the Problems

The present inventors have made studies, and, as a result, it has been found that, by using, as an adhesive auxiliary, a hydrolyzable compound having a thioether bond and having a cyclic structure, particularly an aromatic ring or a heterocycle in the compound, a silicone composition which can solve the above-mentioned problems can be obtained, and the present invention has been completed.

### Effect of the Invention

In the present invention, there is provided a moisture curable silicone composition having not only high adhesive properties but also excellent water resistance, resistance to salt water, and oil resistance. Specifically, the present invention is directed to the following items [1] to [6].
[1] A moisture curable silicone composition comprising:
   (A) a polyorganosiloxane having per molecule two or more hydroxyl groups or hydrolyzable groups bonded to a silicon atom;
   (B) a siloxane compound having per molecule two or more -OR² groups (wherein R² each occurrence is independently a hydrogen atom or a monovalent organic group) bonded to a silicon atom;
   (C) a condensation catalyst;
   (D) a silicon adhesion imparting agent (excluding a compound corresponding to the component (A) or (B)) which is a compound having per molecule at least one adhesion imparting functional group selected from the group consisting of an aromatic hydrocarbon-containing group, an epoxy group-containing group, and a linear, branched, or cyclic aliphatic unsaturated hydrocarbon group, and having per molecule at least one heteroatom in addition to the adhesion imparting functional group; and
   (E) an inorganic filler,
   wherein the amount of the component (D) contained is 0.05 to 20 parts by mass, relative to 100 parts by mass of the component (A).
[2] The moisture curable silicone composition according to item [1] above, wherein the component (D) is at least one member selected from the group consisting of a sulfur compound, a nitrogen compound, and a phosphorus compound.
[3] The moisture curable silicone composition according to item [1] or [2] above, wherein the component (D) is an organosilicon compound having at least one SiR⁵₃₋ₙ(OR⁵)ₙ group (wherein R⁵ is a monovalent hydrocarbon group having no aliphatic unsaturated bond, and n is 1, 2, or 3) and/or a partial hydrolysis condensation product thereof.
[4] The moisture curable silicone composition according to item [3] above, wherein the component (D) further has at least one group selected from the group consisting of an aromatic hydrocarbon-containing group, an epoxy group-containing group, and an aliphatic unsaturated hydrocarbon group.
[5] The moisture curable silicone composition according to any one of items [1] to [4] above, wherein the component (A) comprises a linear polyorganosiloxane having both ends capped by an R^{a}₃₋ₘR³ₘSiO_{1/2} unit and having an intermediate unit comprised of an R³₂SiO_{2/2} unit (wherein R^{a} is a hydroxyl group or a hydrolyzable group, R³ is a hydrogen atom or a monovalent hydrocarbon group having no aliphatic unsaturated bond, and m is 0, 1, or 2).
[6] The moisture curable silicone composition according to any one of items [1] to [5] above, wherein the component (B) comprises a compound represented by the following formula:

   R¹ₙSi(OR²)₄₋ₙ

   wherein R¹ each occurrence is independently a substituted or unsubstituted monovalent hydrocarbon group having 1 to 12 carbon atoms,
   R² each occurrence is independently a hydrogen atom or an alkyl group or alkenyl group having 1 to 12 carbon atoms and optionally having a -C(=O)-, -NR'-, or - N=C(R')- group at an end thereof, and optionally having one or more hydrogens replaced by a halogen or an alkoxy group (wherein R' is an alkyl group having 1 to 6 carbon atoms, and optionally forms a ring together with a carbon portion of the alkyl group or alkenyl group), and
   n is 0, 1, or 2,
   or a partial hydrolysis condensation product thereof.

### MODE FOR CARRYING OUT THE INVENTION

The present invention is, as mentioned above, directed to a moisture curable silicone composition comprising: (A) a polyorganosiloxane having per molecule two or more hydroxyl groups or hydrolyzable groups bonded to a silicon atom; (B) a siloxane compound having per molecule two or more -OR² groups (wherein R² each occurrence is independently a hydrogen atom or a monovalent organic group) bonded to a silicon atom; (C) a condensation catalyst; (D) a silicon adhesion imparting agent (excluding a compound corresponding to the component (A) or (B)) which is a compound having per molecule at least one adhesion imparting functional group selected from the group consisting of an aromatic hydrocarbon-containing group, an epoxy group-containing group, and a linear, branched, or cyclic aliphatic unsaturated hydrocarbon group, and having per molecule at least one heteroatom in addition to the adhesion imparting functional group; and (E) an inorganic filler, wherein the amount of the component (D) contained is 0.05 to 20 parts by mass, relative to 100 parts by mass of the component (A). Hereinbelow, the composition of the present invention will be described in detail item by item. In the present specification, the range of values indicated using the preposition "to" means a range of values including the respective values shown before and after the preposition "to" as the lower limit and the upper limit.

The term "organic group" used in the present specification means a group containing carbon. The valence of the organic group is expressed by indicating "n-valent" wherein n is an arbitrary natural number. Accordingly, for example, the term "monovalent organic group" means a group containing carbon and having only one bonding site. An element other than carbon may have a bonding site. Even when the valence is not specified, those skilled in the art can grasp an appropriate valence from the context.

The term "hydrocarbon group" used in the present specification means a group containing carbon and hydrogen, which results from elimination of at least one hydrogen atom from a molecule. With respect to the hydrocarbon group, there is no particular limitation, but examples include hydrocarbon groups having 1 to 20 carbon atoms and being optionally substituted with one or more substituents, such as an aliphatic hydrocarbon group and an aromatic hydrocarbon group. The "aliphatic hydrocarbon group" may be linear, branched, or cyclic, and may be saturated or unsaturated. Further, the hydrocarbon group may contain one or more cyclic structures. The hydrocarbon group may have in the end or molecular chain thereof one or more heteroatoms or structures containing a heteroatom, such as a nitrogen atom (N), an oxygen atom (O), a sulfur atom (S), a phosphorus atom (P), a silicon atom (Si), an amide linkage, a sulfonyl linkage, a siloxane bond, a carbonyl group, or a carbonyloxy group.

With respect to the substituent for the "hydrocarbon group" used in the present specification, there is no particular limitation, but examples include halogen atoms; and groups which are optionally substituted with one or more halogen atoms, and which are selected from a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, 5- to 10-membered heterocyclic groups, 5- to 10-membered unsaturated heterocyclic groups, a C₆₋₁₀ aryl group, and 5- to 10-membered heteroaryl groups.

In the present specification, an alkyl group and a phenyl group may be unsubstituted or substituted unless otherwise specified. With respect to the substituent for the above groups, there is no particular limitation, but examples include one or more groups selected from a halogen atom, a C₁₋₆ alkyl group, a C₂₋₆ alkenyl group, and a C₂₋₆ alkynyl group.

### • Component (A)

The curable polyorganosiloxane composition of the present invention comprises, as component (A), at least one polyorganosiloxane having per molecule two or more hydroxyl groups or hydrolyzable groups bonded to a silicon atom. Component (A) functions as a base polymer for the curable polyorganosiloxane composition. The hydroxyl groups or hydrolyzable groups can be present at arbitrary positions of the polyorganosiloxane molecule. For example, the polyorganosiloxane may have hydroxyl groups or hydrolyzable groups at molecular ends, or the hydroxyl groups or hydrolyzable groups may be present at positions other than the ends as a side chain. In the case of a linear polyorganosiloxane, it is preferred that at least one of hydroxyl groups or hydrolyzable groups is present at both ends of the molecular main chain of component (A). In the present specification, the molecular main chain of component (A) indicates the relatively longest bonding chain in the molecule of component (A).

The term "hydrolyzable group" means a group that can undergo a hydrolysis reaction, namely, means a group that can be eliminated from the main skeleton of a compound by a hydrolysis reaction. Examples of hydrolyzable groups include -OR', - OCOR', -O-N=CR'₂, -NR'₂, -NHR', and a halogen atom (wherein R' represents a substituted or unsubstituted alkyl group having 1 to 4 carbon atoms), and preferred is - OR' (i.e., an alkoxy group). Examples of R's include unsubstituted alkyl groups, such as a methyl group, an ethyl group, a propyl group, an isopropyl group, a n-butyl group, and an isobutyl group; and substituted alkyl groups, such as a chloromethyl group. Of these, an alkyl group, especially an unsubstituted alkyl group is preferred, and a methyl group or an ethyl group is more preferred. With respect to the hydroxyl group, there is no particular limitation, but the hydroxyl group may be a hydroxyl group which results from hydrolysis of a hydrolyzable group. Examples of halogen atoms include a fluorine atom, a chlorine atom, a bromine atom, and an iodine atom, and, of these, a chlorine atom is preferred.

With respect to the molecular skeleton of component (A), there is no particular limitation as long as the molecular skeleton has a siloxane bond as a main skeleton. The siloxane skeleton may be intermitted by a divalent organic group. In the present specification, in the description of the structure of the siloxane compound, the structural units of the siloxane compound are frequently indicated using the abbreviations shown below. Hereinafter, these structural units are frequently respectively referred to as, for example, "M unit" and "D unit".
M: -Si(CH₃)₃O_{1/2}
D: Si(CH₃)₂O_{2/2}
T: Si(CH₃)O_{3/2}
Q: SiO_{4/2}

In the present specification, the siloxane compound is composed of a combination of the above-mentioned structural units, but may at least partially contain the structural units, of which the methyl group is replaced by another group, e.g., a halogen, such as fluorine, or a hydrocarbon group, such as a phenyl group. In this case, for clearly showing that the structural unit is substituted by a substituent, for example, the D unit substituted by a phenyl group is indicated by D^{Ph}. Further, for example, when a structure is indicated by D^{Ph}₂₀D₂₀, the indication is intended to show that, among 40 D units, 20 phenyl groups are contained in total. The indication is not intended to show that 20 D^{Ph} units are continuously disposed and then 20 D units are continuously disposed. It is understood that the individual units may be arbitrarily arranged, and can contain a structural unit represented by SiPh₂O₂₂ (which is indicated by D^{Ph2}). The siloxane compound can have various three-dimensional structures using a T unit or a Q unit, and component (A) can have a linear molecular skeleton composed of an arbitrary combination of the above-mentioned M units and D units.

In an embodiment of the present invention, with respect to the component (A), there is no particular limitation as long as the polyorganosiloxane has two or more hydroxyl groups or hydrolyzable groups bonded to a silicon atom per molecule on average, and can undergo a condensation reaction with the -OR² group of the below-mentioned component (B) to form a network structure. Component (A) typically has per molecule at least two units represented by the following general formula (1):

(R ^{a})ₛ(R³)ₜSiO_{(4-s-t)/2} (1)

wherein R^{a} is a hydroxyl group or a hydrolyzable group;
R³ is a monovalent hydrocarbon group having no aliphatic unsaturated bond;
s is an integer of 1 to 3; and
t is an integer of 0 to 2, with the proviso that s + t is 1 to 3.

As a specific example of component (A), there can be mentioned a linear polyorganosiloxane represented by the following general formula (2):

(R^{a})₃₋ₚRₚSi-O-(Si(R)ᵣ(R^{a})₂₋ᵣO)ₙ-SiR_{q}(R^{a})_{3-q} (2)

wherein each R^{a} is independently a hydroxyl group or a hydrolyzable group,
each R is independently a monovalent organic group,
each of p and q is independently 0, 1, or 2,
each r is independently 0, 1, or 2, and
n is such a number that the viscosity at 23°C is 0.1 to 500 Pa•s.
R preferably has a hydrocarbon group, particularly, an alkyl group, an alkenyl group, or an aryl group. From the viewpoint of controlling physical properties, such as a refractive index, at least part of R's may be an aryl group, such as a phenyl group. A polyorganosiloxane in which all of R's are methyl is especially preferably used in view of easy availability. With respect to the position of the curable functional group, preferred is the polyorganosiloxane of the formula (2) wherein r is 2, that is, preferred is a linear polyorganosiloxane in which at least one curable functional group is present only at both ends of the molecule. As an example of such component (A), there can be mentioned a linear polyorganosiloxane having both ends capped by an R^{a}₃₋ₘR³ₘSiO_{1/2} unit and having an intermediate unit comprised of an R³₂SiO_{2/2} unit (wherein R^{a} is a hydroxyl group or a hydrolyzable group, R³ is a monovalent hydrocarbon group, and m is 0, 1, or 2).

With respect to the polyorganosiloxane having hydroxyl groups or hydrolyzable groups bonded to a silicon atom, preferred is the polyorganosiloxane of the formula (2) wherein p and q are 0 or 1, that is, preferred is the polyorganosiloxane having two or more hydroxyl groups or hydrolyzable groups at the molecular ends thereof. With respect to the polyorganosiloxane usable as component (A), one which is commercially available can be used. Further, a polyorganosiloxane having hydroxyl groups or hydrolyzable groups introduced by a known reaction may be used. The compounds as component (A) are classified each other according to, for example, the position or type of the substituent or the polymerization degree, and a single compound may be solely used, or two or more compounds may be used in combination. Component (A) is a polyorganosiloxane, and therefore may be a mixture of polyorganosiloxanes having different polymerization degrees.

With respect to the amount of the incorporated component (A), there is no particular limitation as long as the curable polyorganosiloxane composition has a viscosity in such a range that the composition can be handled. The amounts of the other components incorporated, based on the amount of component (A), can be appropriately selected within the preferred ranges shown below for the individual components.

### • Component (B)

The crosslinking agent in the curable composition of the present invention is a compound having at least two -OR² groups bonded to a Si atom or a partial hydrolysis condensation product thereof (hereinafter, referred to also as "crosslinking agent"), wherein the compound and component (A), specifically, the hydroxyl groups or hydrolyzable groups of component (A) bonded to a Si atom undergo a crosslinking reaction (condensation reaction). In the formula above, R² each occurrence is independently a hydrogen atom or a monovalent organic group, and is preferably a monovalent organic group. The monovalent organic group means a group containing monovalent carbon. With respect to the monovalent organic group, there is no particular limitation, but examples include a monovalent hydrocarbon group. The hydrocarbon group is as defined above.

The crosslinking agent may have or may not have a reactive functional group other than the Si-OR² group, but, in view of the crosslinking properties, it is preferred that the crosslinking agent does not have another reactive functional group. In the present invention, the another reactive functional group indicates, for example, a primary amino group, an epoxy group, (a)an (meth)acryloyl group, (a)an (meth)acryloxy group, a mercapto group, and an isocyanato group. Hereinbelow, with respect to the crosslinking agent, (B1) crosslinking agent having no reactive functional group and (B2) crosslinking agent having a reactive functional group are individually described.

### <<(B1) Crosslinking agent having no reactive functional group>>

As an example of crosslinking agent (B1) having no reactive functional group, there can be mentioned an organosilicon compound represented by R¹ₙSi(OR²)₄₋ₙ (wherein R¹ each occurrence is independently a substituted or unsubstituted monovalent hydrocarbon group, R² each occurrence is independently a hydrogen atom or a monovalent organic group, and n is 0, 1, or 2).

It is preferred that R¹ each occurrence is independently a substituted or unsubstituted monovalent hydrocarbon group having 1 to 12 carbon atoms. Specific examples of R¹'s include alkyl groups, such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, and a decyl group; cycloalkyl groups, such as a cyclopentyl group, a cyclohexyl group, and a cycloheptyl group; aryl groups, such as a phenyl group, a tolyl group, a xylyl group, and a naphthyl group; aralkyl groups, such as a benzyl group, a phenylethyl group, and a phenylpropyl group; alkenyl groups, such as a vinyl group, an allyl group, a propenyl group, and a butenyl group; alkynyl groups, such as an ethynyl group and a propynyl group; and groups obtained by replacing part of or all of hydrogen atoms of the above hydrocarbon group by a halogen atom, such as fluorine, chlorine, or bromine (for example, a chloromethyl group, a bromoethyl group, a chloropropyl group, a trifluoropropyl group, and a 3,3,4,4,5,5,6,6,6-nonafluorohexyl group).

R² each occurrence is independently a hydrogen atom or an alkyl group or alkenyl group having 1 to 12 carbon atoms and optionally having a -C(=O)-, -NR'-, or - N=C(R')- group at an end thereof, and optionally having one or more hydrogens replaced by a halogen or an alkoxy group (wherein R' is an alkyl group having 1 to 6 carbon atoms, and optionally forms a ring together with a carbon portion of the alkyl group or alkenyl group), and is specifically, preferably CH₃-, C₂H₅-, C₃H₇-, CF₃CH₂-, CH₃CO-, CH₂=C(CH₃)-, CH₃CH₂C(CH₃)=N-, (CH₃)₂N-, (C₂H₅)₂N-, CH₂=C(OC₂H₅)-, (CH₃)₂C=C(OC₈H₁₇)-, or 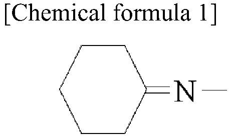 R² is more preferably a substituted or unsubstituted alkyl group having 1 to 3 carbon atoms, especially preferably CH₃- or C₂H₅-.

n is preferably 1 or 2.

As a further example of crosslinking agent (B1) having no reactive functional group, there can be mentioned an organosilicon compound having at least one [Si(XOR^{g3})(CH₃)O] unit and optionally an [Si(R^{g4})(CH₃)O] unit, wherein the units are bonded to form a ring. It is understood that the order of arrangement of the unit containing OR^{g3} and the unit containing R^{g4} is arbitrary, for example, the unit containing OR^{g3} and the unit containing R^{g4} are alternately present.

R^{g3} is a monovalent organic group, and specific examples of R^{g3}'s include an alkyl group having 1 to 12 carbon atoms, preferably having 1 to 4 carbon atoms, and a group represented by -Si(OR")_{3-w}R"_{w} (wherein R" is an alkyl group having 1 to 4 carbon atoms, and w is an integer of 0 to 3). More specific examples of R^{g3}'s include alkyl groups, such as a methyl group, an ethyl group, a propyl group, an isopropyl group, a butyl group, an isobutyl group, and a tert-butyl group, a trimethoxysilyl group, a triethoxysilyl group, a dimethoxymethylsilyl group, and a diethoxyethylsilyl group.

X is a single bond or a divalent alkylene group having 1 to 12 carbon atoms.

R^{g4} each occurrence is independently a monovalent organic group. R^{g4} is preferably a substituted or unsubstituted monovalent hydrocarbon group, more preferably a substituted or unsubstituted monovalent hydrocarbon group having 1 to 12 carbon atoms. Specific examples of R^{g4}'s include alkyl groups, such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, and a decyl group; cycloalkyl groups, such as a cyclopentyl group, a cyclohexyl group, and a cycloheptyl group; aryl groups, such as a phenyl group, a tolyl group, a xylyl group, and a naphthyl group; aralkyl groups, such as a benzyl group, a phenylethyl group, and a phenylpropyl group; alkenyl groups, such as a vinyl group, an allyl group, a propenyl group, and a butenyl group; alkynyl groups, such as an ethynyl group and a propynyl group; and groups obtained by replacing part of or all of hydrogen atoms of the above hydrocarbon group by a halogen atom, such as fluorine, chlorine, or bromine (for example, a chloromethyl group, a bromoethyl group, a chloropropyl group, a trifluoropropyl group, and a 3,3,4,4,5,5,6,6,6-nonafluorohexyl group).

The number of [Si(XOR^{g3})(CH₃)O] units contained per molecule is at least 1, preferably 4 or less. The number of [Si(R^{g4})(CH₃)O] units may be 0, but, when the number of [Si(XOR^{g3})(CH₃)O] unit is 1, the number of [Si(R^{g4})(CH₃)O] units is 1 or more. The total of the number of [Si(XOR^{g3})(CH₃)O] units and the number of [Si(R^{g4})(CH₃)O] units contained per molecule is preferably 2 to 4.

Crosslinking agent (B1) having no reactive functional group is preferably a compound represented by the formula: R¹ₙSi(OR²)₄₋ₙ (wherein R¹, R², and n are as defined above).

In a preferred embodiment, examples of crosslinking agents (B1) having no reactive functional group include alkoxy group-containing compounds, such as tetramethoxysilane, methyltrimethoxysilane, vinyltrimethoxysilane, decyltrimethoxysilane, phenyltrimethoxysilane, tetraethoxysilane, methyltriethoxysilane, vinyltriethoxysilane, phenyltriethoxysilane, tetrapropoxysilane, tetraisopropoxysilane, dimethyldimethoxysilane, vinylmethyldimethoxysilane, dimethyldiethoxysilane, diphenyldimethoxysilane, 3-chloropropyltrimethoxysilane, and partial hydrolysis condensation products thereof; substituted alkoxy group-containing compounds, such as tetrakis(2-ethoxyethoxy)silane, methyltris(2-methoxyethoxy)silane, vinyl(2-ethoxyethoxy)silane, phenyltris(2-methoxyethoxy)silane, and partial hydrolysis condensation products thereof; enoxy group-containing compounds, such as methyltripropenoxysilane, methyltriisopropenoxysilane, vinyltriisopropenoxysilane, phenyltriisopropenoxysilane, dimethyldiisopropenoxysilane, methylvinyldiisopropenoxysilane, and partial hydrolysis condensation products thereof; acyloxy group-containing compounds, such as methyltriacetoxysilane and a partial hydrolysis condensation product thereof; and a cyclic siloxane compound represented by the following formula:

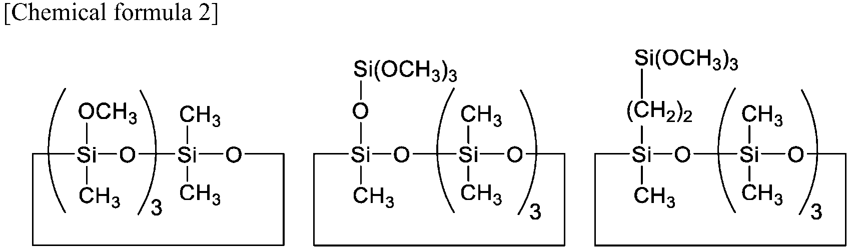

### <<(B2) Crosslinking agent having a reactive functional group>>

Crosslinking agent (B2) having a reactive functional group is a compound which not only participates in a crosslinking reaction (condensation reaction) together with component (A), but also functions as an adhesion imparting agent. With respect to component (B2), a compound represented by the following formula: 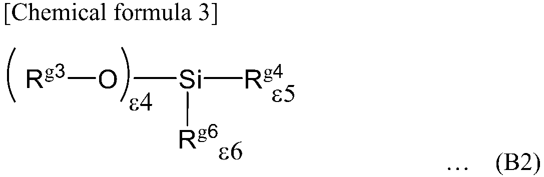 can be used.

In the formula (B2), R^{g3} and R^{g4} are as defined above.

In the formula (B2), R^{g6} each occurrence independently represents R^{g8}-R^{g7}-.

R^{g7} each occurrence independently represents a single bond, an oxygen atom, or a divalent organic group. The divalent organic group is as described above.

R^{g7} is preferably an alkylene group having 1 to 10 carbon atoms or a group having 1 to 10 carbon atoms and containing a nitrogen atom or an oxygen atom in the main chain.

R^{g7} is more preferably an alkylene group having 1 to 3 carbon atoms, CH₂CH₂-NH-CH₂CH₂CH₂, or CH₂-O-CH₂CH₂CH₂.

R^{g8} is a reactive functional group. R^{g8} each occurrence is preferably independently a primary amino group, an epoxy group, (a)an (meth)acryloyl group, (a)an (meth)acryloxy group, a mercapto group, or an isocyanato group, more preferably a primary amino group.

In the formula (B2), ε4 is 2 or 3, more preferably 3. In the formula (B2), ε5 is 0 or 1. In the formula (B2), ε6 is 1 or 2, preferably 1, with the proviso that the sum of ε4, ε5, and ε6 is 4. It is especially preferred that ε4 is 3, ε5 is 0, and ε6 is 1.

Examples of crosslinking agents (B2) having a reactive functional group include substituted or unsubstituted amino group-containing silane, such as 3-aminopropyltrimethoxysilane, 3-aminopropyltriethoxysilane, 3-aminopropyltriisopropoxysilane, 3-aminopropyltriacetamidosilane, N-(2-aminoethyl)-3-aminopropyltrimethoxysilane, N-(2-aminoethyl)-3-aminopropyltriethoxysilane, N-methyl-3-aminopropyltrimethoxysilane, N-phenyl-3-aminopropyltrimethoxysilane, and N,N-dimethyl-3-aminopropyltrimethoxysilane; epoxy group-containing silane, such as 3-glycidoxypropyltrimethoxysilane, 3-glycidoxypropyltriethoxysilane, 3-glycidoxypropylmethyldimethoxysilane, and 3,4-epoxycyclohexylethyltrimethoxysilane; isocyanato group-containing silane, such as 3-isocyanatopropyltrimethoxysilane, 3-isocyanatopropyltriethoxysilane, and 3-isocyanatopropylmethyldimethoxysilane; (meth)acryloxy group-containing silane, such as 3-acryloxypropyltrimethoxysilane, 3-methacryloxypropyltrimethoxysilane, 3-acryloxypropylmethyldimethoxysilane, 3-methacryloxypropylmethyldimethoxysilane, and 3-methacryloxypropylmethyldiethoxysilane; mercapto group-containing silane, such as 3-mercaptopropyltrimethoxysilane; and a mixture or reaction product of a primary amino group-containing silane and an epoxy group-containing silane.

A single crosslinking agent may be solely used, or two or more crosslinking agents may be used in combination. When two or more crosslinking agents are used in combination, two or more crosslinking agents (B1) may be used in combination, two or more crosslinking agents (B2) may be used in combination, or one or more crosslinking agents (B1) and one or more crosslinking agents (B2) may be used in combination. From the viewpoint of the crosslinking properties, crosslinking agent (b) preferably contains at least one crosslinking agent (B1).

Further, when, for example, two or more alkoxysilanes represented by the formula: R¹ₙSi(OR²)₄₋ₙ are contained as the crosslinking agent, it is preferred that two alkoxysilanes of the above formula having different n values are used in combination, and, in this case, it is preferred that, in the alkoxysilane having the smaller n value, the numbers of carbon atoms of R¹ and R² are smaller. For example, when using a tetra-functional alkoxysilane of the above formula wherein the n value is 0 and a trifunctional alkoxysilane of the above formula wherein the n value is 1, it is preferred that the number of carbon atoms of at least one of R¹ and R² of the trifunctional alkoxysilane is smaller than the number of carbon atoms of R¹ and R² of the tetra-functional alkoxysilane, and it is preferred that the number of carbon atoms of each of R¹ and R² of the trifunctional alkoxysilane is smaller than the number of carbon atoms of R¹ and R² of the tetra-functional alkoxysilane.

In the curable composition, the crosslinking agent can be contained in an amount of, for example, 0.1 parts by mass or more, specifically 0.3 parts by mass or more, relative to 100 parts by mass of component (A), and can be contained in an amount of 30 parts by mass or less, specifically 20 parts by mass or less, more specifically 10 parts by mass or less.

In the curable composition, the crosslinking agent can be contained in an amount of, for example, 0.1 to 30 parts by mass, specifically 0.3 to 10 parts by mass, more specifically 0.3 to 5.0 parts by mass, relative to 100 parts by mass of component (A).

In the curable composition, the crosslinking agent can be contained in such an amount that, for example, the amount of -OR² group is 1 mol or more, specifically 2 mol or more, relative to 1 mol of the hydroxyl groups or hydrolyzable groups of component (A) bonded to a Si atom. The crosslinking agent can be contained in such an amount that, for example, the amount of -OR² group is 30 mol or less, specifically 20 mol or less, more specifically 10 mol or less, relative to 1 mol of the hydroxyl groups or hydrolyzable groups of component (A) bonded to a Si atom.

The crosslinking agent can be contained in such an amount that, for example, the amount of -OR² group is in the range of from 1 to 30 mol, specifically in the range of from 2 to 20 mol, relative to 1 mol of the hydroxyl groups or hydrolyzable groups of component (A) bonded to a Si atom.

### (Condensation catalyst)

Condensation catalyst (C) is a component for accelerating a hydrolysis condensation of component (A) and the crosslinking agent. With respect to the condensation catalyst, for example, a metal catalyst, an organic acid catalyst, an inorganic acid catalyst, or a basic catalyst can be used. From the viewpoint of the curing rate of the composition, the condensation catalyst is preferably a metal catalyst.

Examples of metal atoms contained in the metal catalyst include titanium, zirconium, and tin. Especially, the metal catalyst is preferably an organotin compound or an alkoxytitanium.

As one mode of the metal catalyst, a compound having an alkoxide (-O-R^{h}) as a ligand can be used. When the compound having an alkoxide is used as the metal catalyst, R^{h} is preferably an alkyl group having 1 to 4 carbon atoms. By using such a catalyst, the condensation reaction is further accelerated. When the compound having an alkoxide is used as the metal catalyst, R^{h} is more preferably an alkyl group having 1 to 3 carbon atoms. By using such a catalyst, the condensation reaction is especially accelerated. The catalyst can be easily dissolved or dispersed in the curable composition to contribute to acceleration of a uniform reaction. The catalyst can contribute to formation of a cured product of the curable composition, which has less foreign matter and is transparent.

Examples of preferred metal catalysts include metal carboxylates, such as iron octoate, manganese octoate, zinc octoate, tin naphthate, tin caprylate, and tin oleate; organotin compounds, such as dibutyltin diacetate, dibutyltin dioctoate, dibutyltin dilaurate, dibutyltin dioleate, diphenyltin diacetate, dibutyltin oxide, dibutyltin dimethoxide, dibutylbis(triethoxysiloxy)tin, dioctyltin dilaurate, and dimethyltin dineodecanoate; organotitaniums, such as tetraethoxytitanium, tetrapropoxytitanium, tetraisopropoxytitanium, tetra-n-butoxytitanium, tetraisobutoxytitanium, diisopropoxytitanium bis(ethylacetoacetate), and 1,3-propanedioxytitanium bis(ethylacetoacetate); organoaluminums, such as aluminum trisacetylacetonate, aluminum trisethylacetoacetate, diisopropoxyaluminum ethylacetoacetate, and triethoxyaluminum; and organozirconium compounds, such as zirconium tetraacetylacetonate, tetraisopropoxyzirconium, tetrapropoxyzirconium, tetra-n-butoxyzirconium, tetraisobutoxyzirconium, tributoxyzirconium acetylacetonate, and tributoxyzirconium stearate.

As examples of the organic acid catalysts, there can be mentioned compounds having a carboxylic acid, sulfonic acid, or phosphoric acid, and specific examples include acetic acid, trifluoroacetic acid, methanesulfonic acid, toluenesulfonic acid, and an alkylphosphoric acid.

As examples of the inorganic acid catalysts, there can be mentioned hydrochloric acid and sulfuric acid.

Examples of the basic catalysts include amine compounds, such as ammonia, triethylamine, and diethylamine, dialkylhydroxyamines, such as dimethylhydroxyamine and diethylhydroxyamine, and guanidyl compounds, such as tetramethylguanidine and guanidyl group-containing silane or siloxane.

In the curable composition of the present invention, the condensation catalyst is preferably contained in an amount of 0.01 to 10.0 parts by mass, more preferably 0.03 to 5.0 parts by mass, relative to 100 parts by mass of component (A). A single condensation catalyst may be solely used, or two or more condensation catalysts may be used in combination.

### • Component (D)

The composition of the present invention comprises a specific adhesion imparting agent. Specifically, the composition comprises a silicon adhesion imparting agent (excluding a compound corresponding to component (A) or (B)) which is a compound having per molecule at least one adhesion imparting functional group selected from a linear, branched, or cyclic aliphatic unsaturated hydrocarbon group, an epoxy group, an alkoxy group bonded to a silicon atom, and a hydrogen atom bonded to a silicon atom, and having per molecule at least one heteroatom in addition to the adhesion imparting functional group.

With respect to the structure of the compound corresponding to component (D), as an example of the compound of the simplest structure, there can be mentioned a compound having a structure in which the adhesion imparting functional group and a functional group having a heteroatom are bonded together. Examples of such compounds include 3-acryloxypropyltrimethoxysilane, 3-methacryloxypropyltrimethoxysilane, 3-acryloxypropylmethyldimethoxysilane, 3-methacryloxypropylmethyldimethoxysilane, and 3-methacryloxypropylmethyldiethoxysilane. In view of an improvement of the adhesive properties by molecular design and the durability, as an example of a preferred structure, there can be mentioned a structure in which an adhesion imparting functional group is bonded to the structure of an organic molecule, which corresponds to the main skeleton of a compound, through a group as a spacer. When a heteroatom is present in a site other than the main skeleton of the compound, that is, a heteroatom reactive group is present at an end of the molecule, the reactive group and a condensation catalyst likely undergo coupling to adversely affect the curing properties, causing a curing failure. Therefore, preferred is a structure in which an adhesion imparting functional group is bonded through a group as a spacer in the molecular chain.

With respect to the main skeleton of the compound corresponding to component (D), a polyhydric alcohol, an aromatic compound, or a heterocyclic compound is preferably used because a plurality of adhesion imparting functional groups can be introduced and can easily occupy the equivalent positional relationship in the geometrical structure of the molecule in view of the design. Further, it is preferred that the main skeleton has a portion into which a spacer group can be introduced in the positional relationship that symmetry of the compound is maintained. With respect to the portion into which a spacer group can be introduced, a halogen or an amine can be used because a spacer group can be easily introduced by a substitution reaction, and further the portion preferably has a structure capable of forming an ether linkage or an ester linkage. As preferred examples of the structures which can be employed as the main skeleton, there can be mentioned structures shown below in view of easy availability of the raw materials therefor.

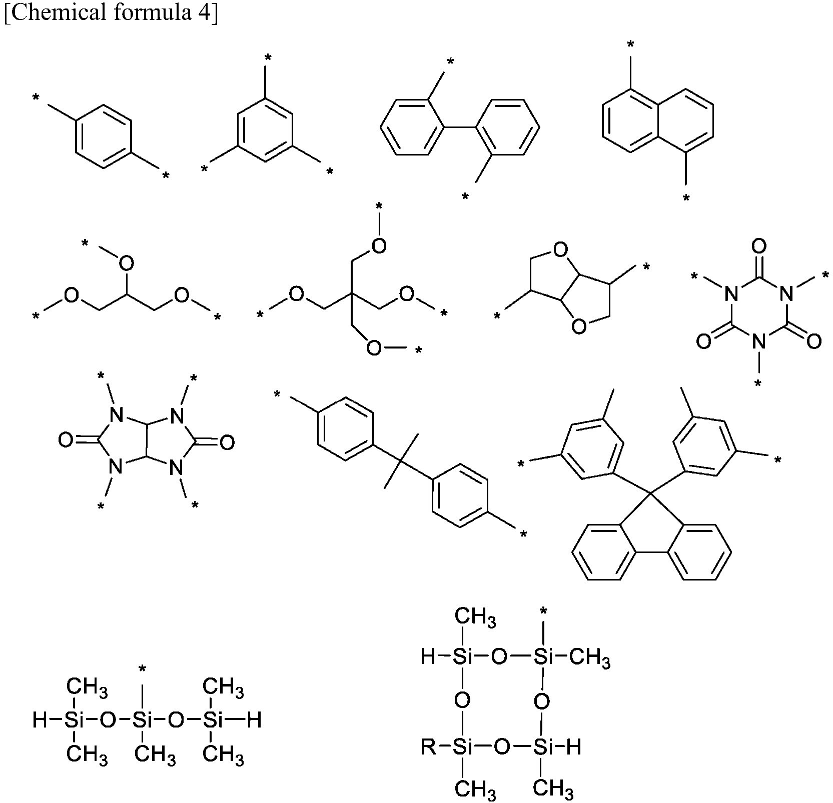

Symbol * indicates a site into which a spacer group is introduced. R is hydrogen or a methyl group.

The spacer group is a portion that links an adhesion imparting functional group and the main skeleton. With respect to the position of the spacer group in the skeleton, there is no particular limitation as long as the spacer group is present in the molecular chain except the ends. It is preferred that a heteroatom is present in the skeleton of the spacer group. As a preferred example of the spacer group, there can be mentioned a divalent alkylene group having at least one site substituted with a heteroatom, which is easy to design. A spacer group having no heteroatom, for example, a divalent alkylene group, such as ethylene (-CH₂-), may be used as long as the spacer group is selected so that one heteroatom is introduced per molecule. From the viewpoint of surely obtaining satisfactory compatibility with a silicone, such as component (A) or component (B), the divalent alkylene group preferably has 1 to 20 carbon atoms, more preferably has 1 to 12 carbon atoms, further preferably has 1 to 8 carbon atoms. The spacer group may have any of a linear structure, a branched structure, and a cyclic structure. Further, from the viewpoint of the molecular design, it is preferred that the below-mentioned adhesion imparting functional group is present at an end portion of the spacer group.

Examples of heteroatoms include an oxygen atom (O), a nitrogen atom (N), a sulfur atom (S), and a phosphorus atom (P). The heteroatom may be contained as a structure, such as carbonyl, thiocarbonyl, or imine. The heteroatom is preferably contained as an ether structure, a thioether structure, or an amine or phosphine structure. The compound comprised of a heteroatom as component (D) is preferably at least one member selected from the group consisting of a sulfur compound, a nitrogen compound, and a phosphorus compound. The compound more preferably has at least one sulfur atom in view of further improving the adhesive properties. When a heteroatom is present in the spacer group, with respect to the positional relationship for the heteroatom, there is no particular limitation.

Component (D) has at least one adhesion imparting functional group selected from a linear, branched, or cyclic aliphatic unsaturated hydrocarbon group, an epoxy group, an alkoxy group bonded to a silicon atom, and a hydrogen atom bonded to a silicon atom. When having one adhesion imparting functional group, component (D) can impart the adhesive properties, but component (D) preferably has two or more adhesion imparting functional groups per molecule. Component (D) preferably has an epoxy group or an alkoxy group bonded to a silicon atom. Component (D) is further preferably an organosilicon compound having at least one SiR⁵₃₋ₙ(OR⁵)ₙ group (wherein R⁵ is a monovalent hydrocarbon group having no aliphatic unsaturated bond, and n is 1, 2, or 3). In this case, R⁵ is especially preferably a methyl group or an ethyl group. Further, when component (D) is an alkoxysilyl compound having the above-mentioned group, a partial hydrolysis condensation product of the compound is also preferred as component (D).

Component (D) may have an arbitrary organic group in addition to the above-mentioned structure. For example, component (D) can further have at least one group selected from the group consisting of an aromatic hydrocarbon-containing group, an epoxy group-containing group, and an aliphatic unsaturated hydrocarbon group. As specific examples of component (D), there can be mentioned the compounds shown below, but component (D) is not limited to these compounds as long as the above-mentioned requirements are satisfied.

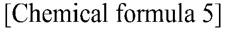

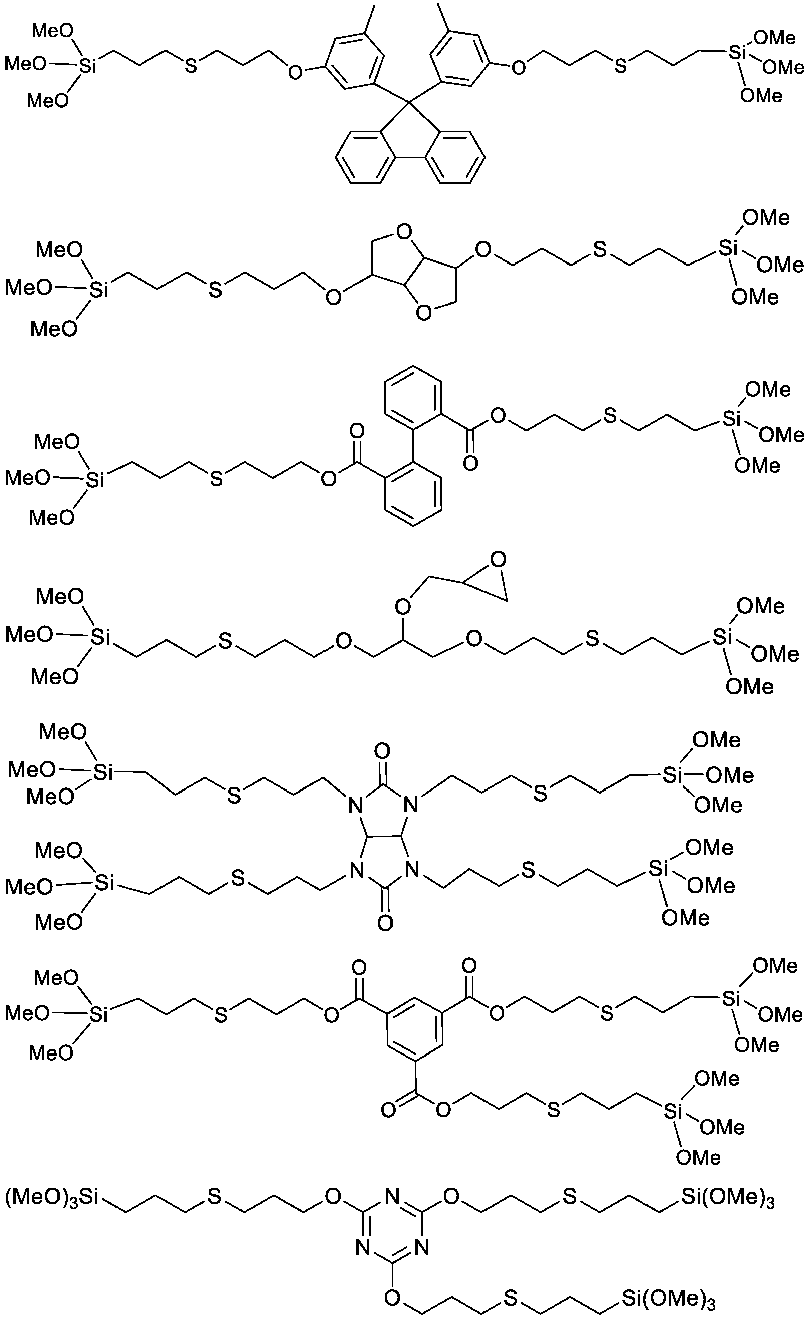

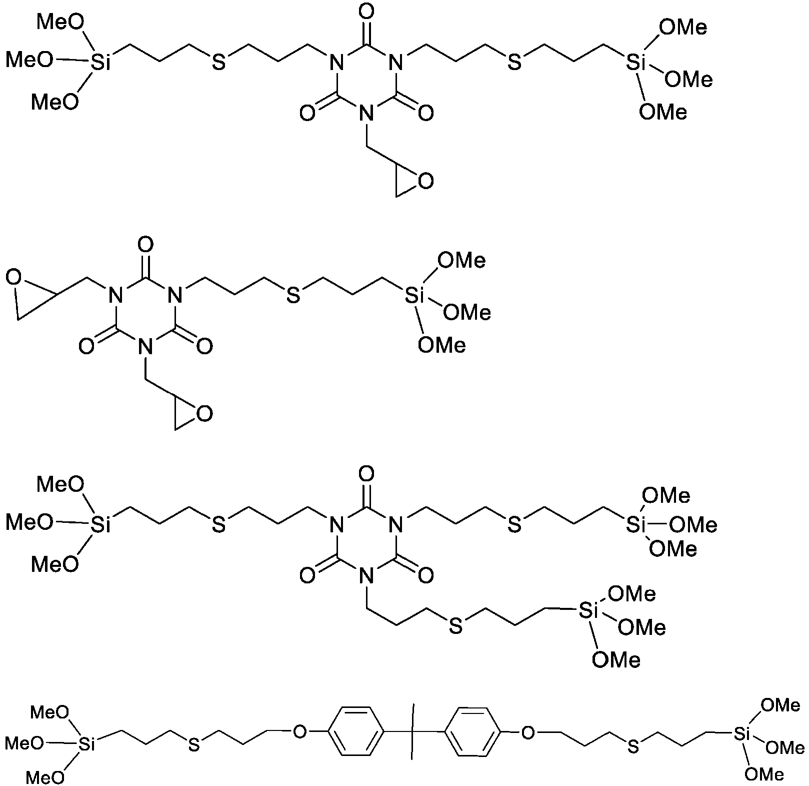

The amount of the component (D) contained is in the range of from 0.05 to 20 parts by mass, relative to 100 parts by mass of component (A). When the amount of component (D) is in the above-mentioned range, the composition can exhibit higher adhesive properties to a substrate. When the amount of component (D) is 0.05 parts by mass or more, the composition is likely to exhibit satisfactory adhesive properties. On the other hand, when the amount of component (D) is 20 parts by mass or less, it is likely that an appropriate concentration of component (A) or (B) in the composition is maintained so that an effect of improving the adhesive properties can be easily obtained, suppressing an occurrence of resinification or crazing in the surface to achieve a further satisfactory cured state. The amount of the component (D) contained is more preferably in the range of from 0.1 to 15 parts by mass, further preferably in the range of from 0.5 to 10 parts by mass.

### • Component (E)

The composition of the present invention further contains an inorganic filler for suppressing the fluidity of the composition. Examples of inorganic fillers include reinforcing fillers, such as fumed titanium oxide; oxides, such as silica, diatomaceous earth, iron oxide, zinc oxide, titanium oxide, and aluminum oxide; carbonates, such as calcium carbonate, magnesium carbonate, and zinc carbonate; silicates, such as aluminosilicate, calcium silicate, and mica; talc; conductive fillers, such as carbon black, a copper powder, and a nickel powder; and the above fillers having the surface treated by a hydrophobicity imparting agent. Of these, the inorganic filler is preferably silica, surface treated silica, carbon black, or calcium carbonate, more preferably silica or surface treated silica.

The curable composition of the present invention especially preferably contains surface treated silica as the inorganic filler. By using the surface treated silica, the fluidity of the composition can be suppressed, and further a mechanical strength can be imparted to a cured product of the composition. In the present specification, the surface treatment indicates covalently treating a silanol group on the surface of silica into a different group using a compound having reactivity with the silanol group.

Examples of silica include fumed silica, calcined silica, silica aerogel, precipitated silica, and ground silica. Of these, fumed silica is preferred in view of suppressing the fluidity of the composition and imparting a mechanical strength to a cured product of the composition using a small amount of the silica incorporated. Further, the surface treated silica preferably has a BET specific surface area of 50 to 500 m²/g, more preferably 80 to 400 m²/g, further preferably 100 to 300 m²/g.

As examples of the method for surface treatment, there can be mentioned a treatment with, for example, a silazane compound (such as hexamethyldisilazane, 1,3-divinyl-1,1,3,3-tetramethyldisilazane, 1,3-bis(chloromethyl)tetramethyldisilazane, 1,3-bis(3,3,3-trifluoropropyl)-1,1,3,3-tetramethyldisilazane, 1,3-diphenyltetramethyldisilazane, heptamethyldisilazane, 2,2,4,4,6,6-hexamethylcyclotrisilazane, octamethylcyclotetrasilazane, 1,1,3,3-tetramethyldisilazane, or 2,4,6-trimethyl-2,4,6-trivinylcyclotrisilazane), an alkoxysilane compound (such as methyltrimethoxysilane, dimethyldimethoxysilane, methyltriethoxysilane, dimethyldiethoxysilane, n-propyltrimethoxysilane, n-propyltriethoxysilane, phenyltrimethoxysilane, phenyltriethoxysilane, hexyltrimethoxysilane, hexyltriethoxysilane, octyltrimethoxysilane, octyltriethoxysilane, decyltrimethoxysilane, or hexadecyltrimethoxysilane), a chlorosilane compound (such as methyltrichlorosilane, dimethyldichlorosilane, or trimethylchlorosilane), octamethylcyclotetrasiloxane, or a dimethylsiloxane oligomer. Of these, a chemical treatment with a silazane compound or a chlorosilane compound is preferred in view of achieving hydrophobicity imparting treatment of the surface of silica using a small amount of the compound for treatment. Especially preferred is hexamethyldisilazane or dimethyldichlorosilane. Further, in view of the treatment degree and stability (inactivation) of the surface state after treated, hexamethyldisilazane is preferred. A surface treatment for silica may be conducted by incorporating the surface treatment agent into the curable composition being prepared, together with silica, and kneading the mixture. Further, a commercially available material may be used.

The inorganic filler having a primary particle diameter of 0.01 to 0.1 µm is preferably used. When the primary particle diameter of the inorganic filler is in the above-mentioned range, the composition having fluidity further suppressed can be obtained. The primary particle diameter of the inorganic filler is preferably 0.02 to 0.08 µm, more preferably 0.03 to 0.07 µm. The measured value of the primary particle diameter is a value measured by a method using an electron microscope.

The amount of the inorganic filler incorporated may be such an amount that the form of the curable composition is maintained after applied, and is preferably appropriately selected in such a range of the amount. Specifically, the inorganic filler is preferably contained in an amount of 1 to 500 parts by mass, preferably 1 to 200 parts by mass, more preferably 1 to 100 parts by mass, relative to 100 parts by mass of component (A). A single inorganic filler may be solely used, or two or more inorganic fillers may be used in combination.

### [Curable polyorganosiloxane composition]

The curable polyorganosiloxane of the present invention comprises the above-mentioned components (A) to (E).

With respect to the appearance of the polyorganosiloxane composition of the present invention, there is no particular limitation as long as the components of the composition are uniformly mixed with each other and the composition has such fluidity that the composition can be applied to a substrate. The polyorganosiloxane composition can be handled by appropriately controlling the viscosity using the below-mentioned resin or solvent. Further, the polyorganosiloxane composition can be a one-part type composition in the state in which all the components are mixed together, or a two-part type composition used in such a way that component (B) and component (C) are separately provided and mixed together immediately before used. The one-part type composition or two-part type composition can be appropriately selected by taking into consideration, for example, the working properties or curing conditions, and the methods for selection are known to those skilled in the art.

In the curable polyorganosiloxane composition of the present invention, any known additional component can be incorporated into the composition as long as the object and effects of the present invention are not sacrificed. As an additive, for example, a flame retardant, an adhesion imparting agent other than component (D), a heat resistance imparting agent, a diluent, an organic solvent, or an inorganic or organic pigment can be appropriately incorporated into the composition. Further, a siloxane resin which does not correspond to the above-mentioned components (A) and (B) can be incorporated into the composition. Examples of such resins include a polyorganosiloxane having only one curable functional group, and a polyorganosiloxane having no curable functional group, such as dimethylsiloxane. These resins can be used as a diluent.

### <Another resin>

The curable polyorganosiloxane composition can further contain a siloxane resin that does not correspond to the above-mentioned component (A) or (B). Such a resin can be used as a diluent for controlling the viscosity of the composition. With respect to the siloxane resin, among the resins obtained from a combination of the above-mentioned M, D, T, and Q units, a resin having no hydroxyl group or no hydrolyzable group or having only one hydroxyl group or hydrolyzable group, particularly, a siloxane having a hydroxyl group or hydrolyzable group at only one site and being represented by the following formula:

(R^{a})₃₋ₚRₚSi-O-(SiR₂O)ₙ-SiR₃

wherein R^{a}, R, p, and n are as defined for the general formula (2), or a siloxane having no hydroxyl group or no hydrolyzable group and being represented by the following formula:

   R₃Si-O-(SiR₂O)ₚ-SiR₃
wherein R and n are as defined for the general formula (2) can be used. By using such a siloxane resin, the hardness of a cured product of the curable polyorganosiloxane composition can be controlled, and the viscosity of the composition can be controlled, and thus the composition can widely cope with the handling properties and the required physical properties.

In the curable polyorganosiloxane composition, the above-mentioned resin can be contained in an amount of, for example, 50 parts by mass or less, specifically 0.1 to 50 parts by mass, more specifically 1 to 30 parts by mass, relative to 100 parts by mass of component (A).

### <Adhesion imparting agent>

The curable polyorganosiloxane composition may further comprise an adhesion imparting agent other than component (D). The adhesion imparting agent is a component for improving the adhesion of a cured product of the composition to a substrate, such as glass, a metal, or a plastic. Examples of the adhesion imparting agents include a metal alkoxide, a compound having a hydrolyzable silyl group, a compound having per molecule a hydrolyzable silyl group and a reactive organic functional group, a compound having per molecule a hydrogen atom bonded to a silicon atom and a divalent aromatic group, a compound having per molecule a hydrogen atom bonded to a silicon atom and a reactive organic functional group, and/or a partial hydrolysis condensation product thereof (excluding a compound corresponding to component (D)). Examples of metal alkoxides include metal alkoxides, e.g., aluminum alkoxides, such as aluminum triethoxide, aluminum tripropoxide, and aluminum tributoxide; and titanium alkoxides, such as titanium tetraethoxide, titanium tetrapropoxide, titanium tetraisopropoxide, titanium tetrabutoxide, titanium tetraisobutoxide, and titanium tetraisopropenyloxide. Examples of organic compound adhesion imparting agents include an amino group-containing silane, an isocyanurate, and a carbasilatrane compound. Specific examples of the adhesion imparting agents include tetraethoxysilane, a tetramethoxysilane oligomer, vinyltrimethoxysilane, vinyltriethoxysilane, 3-glycidoxypropyltrimethoxysilane, 3-glycidoxypropyltriethoxysilane, 3-glycidoxypropylmethyldimethoxysilane, and 3,4-epoxycyclohexylethyltrimethoxysilane.

As examples of the adhesion imparting agents, there can be mentioned an organosilicon compound having an Si(OR⁴)ₙ group (wherein R⁴ represents an alkyl group having 1 to 4 carbon atoms or a 2-methoxyethyl group; and n is an integer of 1 to 4) and having an epoxy group-containing group when n is 1 to 3, and/or a partial hydrolysis condensation product thereof.

Specific examples of adhesion imparting agents other than component (D) include metal alkoxides, e.g., aluminum alkoxides, such as aluminum triethoxide, aluminum tripropoxide, and aluminum tributoxide; titanium alkoxides, such as titanium tetraethoxide, titanium tetrapropoxide, titanium tetraisopropoxide, titanium tetrabutoxide, titanium tetraisobutoxide, and titanium tetraisopropenyloxide; zirconium acylates, such as zirconium octanoate, zirconium tetra(2-ethylhexanoate), and zirconium stearate; zirconium alkoxides (exclusive of zirconium chelates), such as n-propyl zirconate and n-butyl zirconate; and zirconium chelates, such as tributoxyzirconium acetylacetonate, dibutoxyzirconium bis(ethylacetoacetate), zirconium tetraacetylacetonate, zirconium monoacetylacetonate, and zirconium ethylacetoacetate. By using the additional adhesion imparting agent, the adhesive strength can be further improved.

In the curable polyorganosiloxane composition, the additional adhesion imparting agent can be contained in an amount of, for example, 10 parts by mass or less, specifically 0.01 to 10 parts by mass, more specifically 0.1 to 5 parts by mass, relative to 100 parts by mass of component (A). A single adhesion imparting agent may be solely used, or two or more adhesion imparting agents may be used in combination.

### <Solvent>

The curable polyorganosiloxane composition may contain a solvent. In this case, the curable polyorganosiloxane composition can be dissolved in an appropriate solvent at a desired concentration according to the use and purpose. The concentration of the solvent may be, for example, 80 parts by mass or less, relative to 100 parts by mass of the composition, and may be 50 parts by mass or less, may be 30 parts by mass or less, and may be 20 parts by mass or less. From the viewpoint of controlling the viscosity of the curable composition, the curable composition preferably contains a solvent. By virtue of containing a solvent, the curable composition can have excellent handling properties.

An embodiment of the present invention is an adhesive comprising the above-described curable polyorganosiloxane composition. In an article using the curable polyorganosiloxane composition of the present invention as an adhesive, with respect to the form of the article, there is no particular limitation as long as a cured product of the composition and a substrate have a bonded portion. For example, an embodiment of the method for producing an article having a bonded portion of a substrate and a cured product of the composition comprises the steps of: providing a part containing a substrate and the composition; applying the composition to the surface of the substrate; and curing the composition to bond the substrate and a cured product of the composition.

With respect to the material for the substrate to which the adhesive comprising the curable polyorganosiloxane composition of the present invention is applied, there is no particular limitation. With respect to the substrate, there can be used, for example, a metal, such as aluminum, copper, nickel, iron, steel, brass, or stainless steel; an engineering plastic, such as an epoxy resin, a polyester resin, e.g., a polyethylene terephthalate or polybutylene terephthalate (PBT) resin, a polycarbonate resin, an acrylic resin, a polyimide resin, a phenolic resin, a polyamide resin, a polyphenylene sulfide (PPS) resin, or a modified polyphenylene ether (PPE) resin; or glass. Further, if necessary, for example, a wall surface of voids may be subjected to primer treatment according to a general method. With respect to, for example, the form and thickness of the substrate, there is no particular limitation.

The adhesive comprising the curable polyorganosiloxane composition is applied to a site to be bonded of the surface of a part containing a substrate with a predetermined thickness by a coating method, such as dropping, injection, casting, extrusion from a container, bar coating, or roll coating, or a method, such as screen printing, a dipping method, a brushing method, a spraying method, or a dispensing method. These methods are known to those skilled in the art. The composition may be applied entirely and uniformly onto the surface of the part, or may be ununiformly or partially applied onto the surface of the part, for example, in a linear form, a stripe form, or a dotted form. The thickness of the applied composition is generally 0.01 to 3 mm, preferably 0.05 to 2 mm.

The composition is deposited on a site to be bonded of an adherend by a method, such as injection, dropping, casting, casting, or extrusion from a container, or integral molding by transfer molding or injection molding, and allowed to stand at room temperature (for example, at 23°C), so that the composition can be cured and bonded to the adherend at the same time. The curing time is preferably one week or less, more preferably 72 hours or less, especially preferably 24 hours or less in view of the advantage of production.

The article using the curable polyorganosiloxane composition of the present invention as an adhesive has excellent durability performance including water resistance and oil resistance of the bonded surface, and therefore can meet the demands for silicone adhesive with respect to metals, such as aluminum and diecast aluminum, and engineering plastics, such as PBT and PET. The article can be advantageously used as various parts, particularly in the aircraft and automobile use and electronic material field.

### Examples

The composition of the present invention will be described in more detail with reference to the following Examples, which should not be construed as limiting the scope of the present invention.

### (1) Preparation of a moisture curable silicone composition

The components in the formulation shown in Table 1 were kneaded or mixed as described below.

(A) 800 g of terminal trimethoxysilyl group-capped polydimethylsiloxane having a viscosity of 20,000 mPas and 120 g of fumed silica which had been subjected to surface treatment with 1,1,3,3,5,5,7,7-octamethylcyclotetrasiloxane were kneaded at room temperature for 20 minutes, and then kneaded under a reduced pressure for one hour, and then 200 g of terminal trimethoxysilyl group-capped polydimethylsiloxane having a viscosity of 20,000 mPas was added and the resultant mixture was kneaded at room temperature for 20 minutes, and further terminal trimethylsilyl group-capped polydimethylsiloxane was added and the resultant mixture was kneaded at room temperature for 20 minutes, and then kneaded under a reduced pressure for one hour. Then, the components in the formulation shown in Table 1 were mixed and kneaded under a reduced pressure for degassing for 20 minutes, preparing a moisture curable silicone composition. Compound 1 is a compound having a structure shown below.

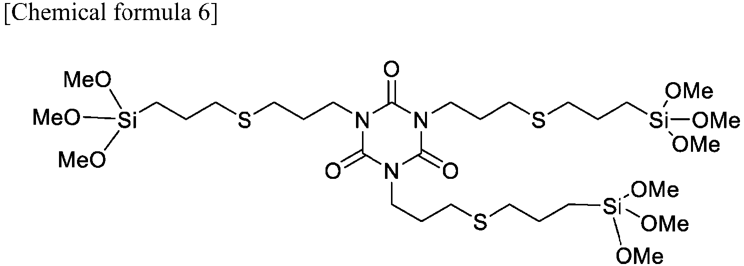

Compound 1 was synthesized as follows. 74.5 g of triallyl isocyanurate, 98 g of 3-mercaptopropyltrimethoxysilane, and 200 g of toluene were placed in this order in a separable flask having a volume of 500 mL, and stirred at room temperature for 10 minutes. 0.5 g of AIBN (azobisisobutyronitrile) was added and the resultant mixture was stirred in a nitrogen gas atmosphere at room temperature for 10 minutes. While continuing stirring, the temperature was increased to 50°C, and the reaction was continued for 6 hours.

Then, while continuing stirring, toluene and unreacted precursor contained in the compound and 3-mercaptopropyltrimethoxysilane were removed in a vacuum at a degree of vacuum of 10 mmHg or less at 120°C for 3 hours. The resultant reaction mixture was cooled to room temperature, obtaining compound 1.

### <Preparation of a moisture curable silicone composition>

Moisture curable silicone compositions in Examples 2 and 3 were individually prepared in accordance with substantially the same procedure as in Example 1 except that the amount of compound 1 was changed to those shown in Table 1. Further, moisture curable silicone compositions in Examples 4 to 10 having the respective formulations shown in Table 1 were individually prepared in accordance with substantially the same procedure as in Example 1 except that the compound corresponding to component (D) was changed to the below-mentioned compounds 2 to 8, and that the amount of the compound added was changed to those shown in Table 1. In addition, moisture curable silicone compositions in Comparative Examples having the respective formulations shown in Table 1 were individually prepared in accordance with substantially the same procedure as in Example 1 except that the compound corresponding to component (D) was not added (Comparative Example 1), that, instead of the compound corresponding to component (D), 0.5 parts by mass of 1,3,5-tris(trimethoxysilylpropyl) isocyanurate was added (Comparative Example 2), or that the amount of compound 1 was changed to 20.41 parts by mass (Comparative Example 3).

Compound 2 is a compound having a structure shown below. Compound 2 was obtained by substantially the same method as that for compound 1 except that the formulation of the amounts of the raw materials was changed. Compound 3 was obtained by substantially the same method as that for compound 1 except that the number of epoxy groups of compound 1 was changed. Further, compounds 4 to 8 were individually obtained by substantially the same method as that for compound 1 except that the substance constituting the main skeleton of compound 1 was changed. Structures of the compounds are as shown below.

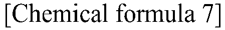

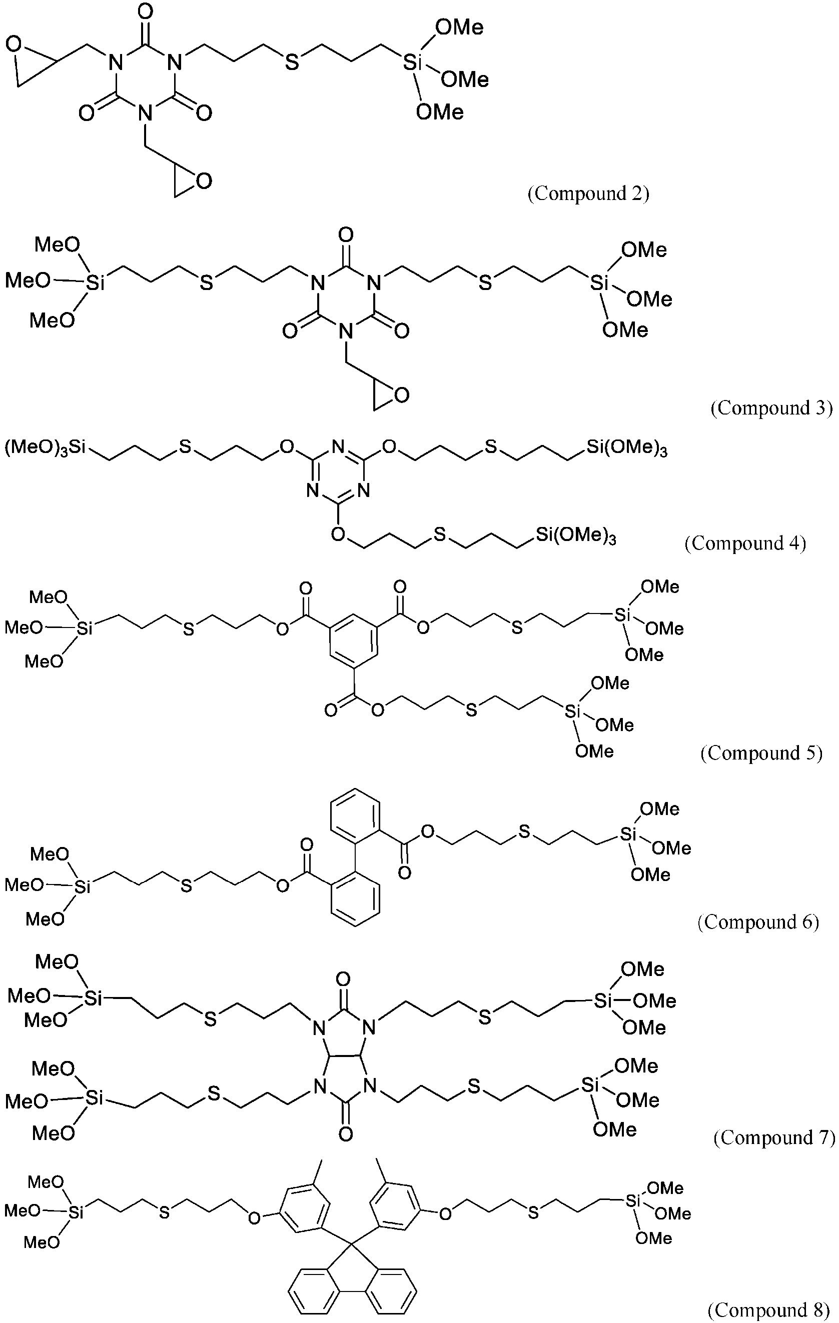

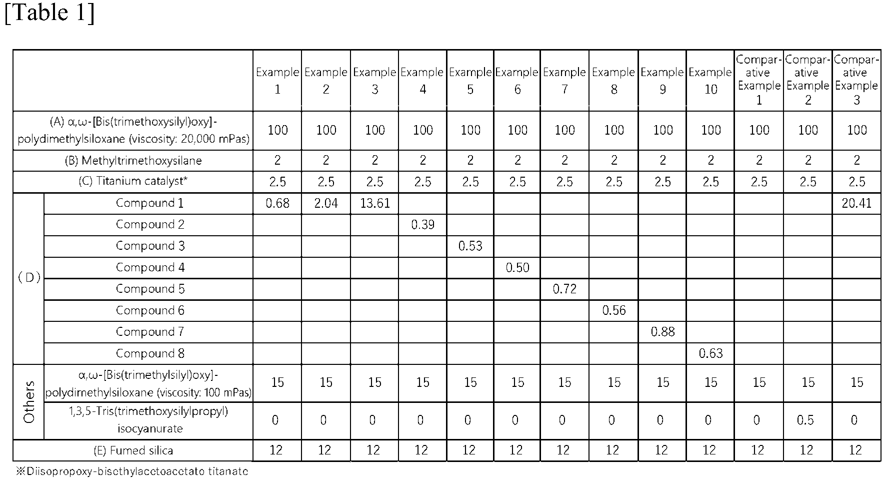

### (Evaluation method)

### <Hardness (Type-A hardness), tensile strength and elongation>

The polyorganosiloxane composition was dispensed and formed into a 2 mm sheet, and then cured by allowing the sheet to stand in an atmosphere with 50% RH at 23°C for 7 days, obtaining a cured product of the polyorganosiloxane composition. With respect to the obtained cured product, a hardness (initial hardness) was measured using a Type-A hardness meter. In addition, a tensile strength was measured in accordance with JIS K 6249. Further, an elongation was measured in accordance with JIS K6249.

### <Tack-free time>

The polyorganosiloxane composition was applied to the surface of a Petri dish made of aluminum having a diameter of 5 cm, which surface had been washed with an organic solvent, and placed in an environment with a relative humidity of 50% (RH) at 23°C, and a period of time required until the surface of the applied composition was found to be in a dry state by touching the surface with a finger was measured.

### <Adhesive strength under shear>

In the evaluation of an adhesive strength under shear, the following method was used. The silicone composition was applied to an end portion of one test specimen and uniformly spread, and then an end portion of another test specimen was put on the composition applied to the specimen so that the bonded surface was 25 mm in the width direction and 10 mm in the lengthwise direction, obtaining a test specimen. The test specimen in the state of being fixed by fixtures was placed in an oven having the temperature controlled for the curing conditions to cure the composition for a time for the curing conditions. After the temperature of the test specimen was back to room temperature (23°C), the prepared test specimen was subjected to measurement using a tensile tester at a rate of pulling of 10 mm/min, determining an "adhesive strength under tensile shear" (MPa). Details of the test were according to JIS K 6249.

### <Cohesive failure rate>

The cohesive failure rate is a rate of the specimen of which the silicone layer is not peeled at the interface between the adherends facing to each other but suffers a failure in the test for adhesive strength under shear. A cohesive failure rate of 100% indicates that the adhesive strength (adhesive properties) has been satisfactorily maintained. An adhesive strength under shear was measured according to the description for "adhesive strength under shear" above, and then a value obtained by dividing the area of the silicone layer bonded to an adherend by the applied area was determined as a cohesive failure rate (% for area). Details of the test were according to JIS K 6249.

### <Test 1: Water resistance test>

With respect to the adhesive strength under shear and cohesive failure rate which are properties related to the adhesive force, the compositions in the Examples and Comparative Examples were individually applied to glass, aluminum, copper, or PPS, and, immediately after the application (0 hours), an adhesive strength under shear and a cohesive failure rate were measured. Subsequently, the same specimens were immersed in water at 70°C or an aqueous solution of sodium chloride (salt water) at 50°C, and, after a lapse of 7 days, and after a lapse of 14 days with respect to the water at 70°C, an adhesive strength under shear and a cohesive failure rate were similarly measured. The results of the evaluation are shown in Tables 2 to 6.

**[Table 2]**

| Table 2: Properties of cured product | | | | |
|---|---|---|---|---|
| | Tack-free time (min.) | Hardness (Type-A) | Tensile strength (MPa) | Elongation (%) |
| Example 1 | 11 | 23 | 1.91 | 340 |
| Example 2 | 10 | 25 | 2.02 | 310 |
| Example 3 | 21 | 29 | 1.63 | 230 |
| Example 4 | 13 | 25 | 2.02 | 290 |
| Example 5 | 12 | 23 | 1.96 | 300 |
| Example 6 | 12 | 22 | 1.78 | 350 |
| Example 7 | 11 | 25 | 1.83 | 320 |
| Example 8 | 11 | 26 | 1.84 | 330 |
| Example 9 | 10 | 25 | 2.01 | 300 |
| Example 10 | 12 | 25 | 1.97 | 300 |
| Comparative Example 1 | 10 | 23 | 1.83 | 340 |
| Comparative Example 2 | 11 | 22 | 1.73 | 320 |
| Comparative Example 3 | 29 | 33 | 1.44 | 140 |

**[Table 3]**

| Glass | Adhesive strength under shear (MPa) | | | | Cohesive failure rate (CF%) | | | |
|---|---|---|---|---|---|---|---|---|
| | 0 hr | Immersed in 70°C water for 7 days | Immersed in 70°C water for 14 days | Immersed in 50°C NaCl solution for 7 days | 0 hr | Immersed in 70°C water for 7 days | Immersed in 70°C water for 14 days | Immersed in 50°C NaCl solution for 7 days |
| Example 1 | 1.34 | 1.15 | 1.05 | 1.03 | 100 | 100 | 100 | 100 |
| Example 2 | 1.37 | 1.16 | 1.09 | 1.04 | 100 | 100 | 100 | 100 |
| Example 3 | 1.19 | 1.03 | 0.97 | 0.93 | 100 | 100 | 100 | 100 |
| Example 4 | 1.31 | 1.23 | 1.13 | 0.98 | 100 | 100 | 100 | 100 |
| Example 5 | 1.29 | 1.19 | 1.08 | 1.01 | 100 | 100 | 100 | 100 |
| Example 6 | 1.29 | 1.01 | 0.95 | 0.78 | 100 | 100 | 100 | 70 |
| Example 7 | 1.36 | 1.25 | 1.19 | 1.12 | 100 | 100 | 100 | 100 |
| Example 8 | 1.23 | 1.12 | 0.88 | 0.87 | 100 | 100 | 80 | 70 |
| Example 9 | 1.42 | 1.22 | 0.82 | 0.81 | 100 | 100 | 70 | 70 |
| Example 10 | 1.27 | 1.19 | 1.03 | 1.01 | 100 | 100 | 100 | 100 |
| Comparative Example 1 | 1.38 | 0.43 | 0.23 | 0.34 | 100 | 0 | 0 | 0 |
| Comparative Example 2 | 1.29 | 1.08 | 0.98 | 0.76 | 100 | 100 | 80 | 60 |
| Comparative Example 3 | 0.72 | 0.48 | 0.33 | 0.51 | 40 | 10 | 0 | 20 |

**[Table 4]**

| Aluminum | Adhesive strength under shear (MPa) | | | | Cohesive failure rate (CF%) | | | |
|---|---|---|---|---|---|---|---|---|
| | 0 hr | Immersed in 70°C water for 7 days | Immersed in 70°C water for 14 days | Immersed in 50°C NaCl solution for 7 days | 0 hr | Immersed in 70°C water for 7 days | Immersed in 70°C water for 14 days | Immersed in 50°C NaCl solution for 7 days |
| Example 1 | 1.28 | 1.21 | 1.03 | 0.98 | 100 | 100 | 100 | 100 |
| Example 2 | 1.27 | 1.19 | 1.02 | 1.00 | 100 | 100 | 100 | 100 |
| Example 3 | 1.16 | 1.01 | 0.91 | 0.91 | 100 | 95 | 90 | 100 |
| Example 4 | 1.23 | 1.01 | 0.85 | 0.88 | 100 | 100 | 95 | 90 |
| Example 5 | 1.26 | 1.22 | 0.98 | 0.92 | 100 | 100 | 100 | 100 |
| Example 6 | 1.24 | 1.03 | 0.89 | 0.68 | 100 | 100 | 100 | 60 |
| Example 7 | 1.33 | 1.18 | 1.02 | 0.92 | 100 | 100 | 100 | 95 |
| Example 8 | 1.21 | 1.03 | 0.88 | 0.72 | 100 | 100 | 100 | 70 |
| Example 9 | 1.38 | 1.13 | 0.81 | 0.68 | 100 | 100 | 100 | 70 |
| Example 10 | 1.23 | 1.02 | 0.97 | 0.95 | 100 | 100 | 400 | 60 |
| Comparative Example 1 | 1.31 | 0.23 | 0.21 | 0.22 | 70 | 0 | 0 | 0 |
| Comparative Example 2 | 1.24 | 1.03 | 0.72 | 0.48 | 100 | 100 | 50 | 30 |
| Comparative Example 3 | 0.68 | 0.31 | 0.18 | 0.28 | 10 | 0 | 0 | 5 |

**[Table 5]**

| Copper | Adhesive strength under shear (MPa) | | | | Cohesive failure rate (CF%) | | | |
|---|---|---|---|---|---|---|---|---|
| | 0 hr | Immersed in 70°C water for 7 days | Immersed in 70°C water for 14 days | Immersed in 50°C NaCl solution for 7 days | 0 hr | Immersed in 70°C water for 7 days | Immersed in 70°C water for 14 days | Immersed in 50°C NaCl solution for 7 days |
| Example 1 | 1.12 | 1.03 | 0.99 | 0.78 | 100 | 100 | 100 | 90 |
| Example 2 | 1.09 | 1.01 | 0.97 | 0.75 | 100 | 100 | 95 | 90 |
| Example 3 | 1.03 | 0.94 | 0.79 | 0.67 | 95 | 90 | 70 | 70 |
| Example 4 | 1.08 | 0.88 | 0.85 | 0.76 | 80 | 75 | 70 | 70 |
| Example 5 | 1.10 | 1.01 | 0.93 | 0.80 | 100 | 100 | 90 | 80 |
| Example 6 | 1.09 | 0.86 | 0.68 | 0.59 | 100 | 100 | 90 | 80 |
| Example 7 | 1.22 | 0.99 | 0.82 | 0.71 | 100 | 100 | 80 | 70 |
| Example 8 | 1.09 | 0.87 | 0.72 | 0.63 | 100 | 90 | 70 | 50 |
| Example 9 | 1.28 | 0.92 | 0.68 | 0.77 | 100 | 90 | 60 | 70 |
| Example 10 | 1.12 | 1.01 | 0.86 | 0.73 | 100 | 100 | 80 | 70 |
| Comparative Example 1 | 1.03 | 0.18 | - | 0.12 | 0 | 0 | 0 | 0 |
| Comparative Example 2 | 1.11 | 0.25 | 0.22 | 0.18 | 80 | 0 | 0 | 0 |
| Comparative Example 3 | 0.62 | 0.43 | 0.29 | 0.18 | 0 | 0 | 0 | 0 |

**[Table 6]**

| P P S | Adhesive strength under shear (MPa) | | | | Cohesive failure rate (CF%) | | | |
|---|---|---|---|---|---|---|---|---|
| | 0 hr | Immersed in 70°C water for 7 days | Immersed in 70°C water for 14 days | Immersed in 50°C NaCl solution for 7 days | 0 hr | Immersed in 70°C water for 7 days | Immersed in 70°C water for 14 days | Immersed in 50°C NaCl solution for 7 days |
| Example 1 | 1.09 | 1.01 | 0.92 | 0.99 | 100 | 100 | 90 | 100 |
| Example 2 | 1.11 | 1.05 | 0.98 | 1.01 | 100 | 100 | 98 | 100 |
| Example 3 | 0.99 | 0.97 | 0.72 | 0.73 | 100 | 90 | 70 | 70 |
| Example 4 | 0.96 | 0.77 | 0.45 | 0.57 | 80 | 60 | 20 | 40 |
| Example 5 | 1.03 | 0.88 | 0.54 | 0.72 | 90 | 60 | 30 | 70 |
| Example 6 | 1.02 | 0.78 | 0.31 | 0.33 | 85 | 50 | 10 | 10 |
| Example 7 | 1.04 | 0.91 | 0.52 | 0.42 | 85 | 80 | 30 | 20 |
| Example 8 | 1.05 | 0.87 | 0.36 | 0.33 | 85 | 80 | 10 | 20 |
| Example 9 | 1.09 | 0.76 | 0.24 | 0.41 | 70 | 50 | 20 | 30 |
| Example 10 | 1.06 | 0.73 | 0.44 | 0.47 | 80 | 50 | 25 | 30 |
| Comparative Example 1 | 0.35 | 0.12 | 0.11 | 0.13 | 0 | 0 | 0 | 0 |
| Comparative Example 2 | 0.44 | 0.22 | 0.17 | 0.14 | 0 | 0 | 0 | 0 |
| Comparative Example 3 | 0.39 | 0.21 | 0.12 | 0.29 | 5 | 0 | 0 | 0 |

### <Test 2: Oil resistance test>

In accordance with the same method as that in Test 1, the compositions in the Examples and Comparative Examples were individually applied to aluminum or mild steel, and immersed in an oil for automobile transmission (AUTO FLUID type T-IV, manufactured by Toyota Motor Corporation) in an environment at 120°C. An adhesive strength under shear and a cohesive failure rate, which are properties related to the adhesive force, were measured after a lapse of 100 hours and a lapse of 240 hours with respect to the aluminum, and after a lapse of 100 hours and a lapse of 14 days with respect to the mild steel. The results of the evaluation are shown in Tables 7 and 8.

**[Table 7]**

| Aluminum (ATF Immersion) | Adhesive strength under shear (MPa) | | Cohesive failure rate (CF%) | |
|---|---|---|---|---|
| | ATF, 120°C, 100 hr | ATF, 120°C, 240 hr | ATF, 120°C, 100 hr | ATF, 120°C, 240 hr |
| Example 1 | 0.98 | 0.74 | 100 | 100 |
| Example 2 | 0.97 | 0.82 | 100 | 100 |
| Example 3 | 0.92 | 0.79 | 90 | 70 |
| Example 4 | 0.87 | 0.75 | 90 | 75 |
| Example 5 | 0.93 | 0.68 | 100 | 95 |
| Example 6 | 0.93 | 0.69 | 100 | 60 |
| Example 7 | 0.97 | 0.62 | 100 | 50 |
| Example 8 | 0.93 | 0.68 | 10 | 70 |
| Example 9 | 0.83 | 0.61 | 100 | 40 |
| Example 10 | 0.92 | 0.77 | 85 | 45 |
| Comparative Example 1 | 0.11 | 0.03 | 0 | 0 |
| Comparative Example 2 | 0.23 | 0.12 | 5 | 0 |
| Comparative Example 3 | 0.94 | 0.58 | 0 | 0 |

**[Table 8]**

| Mild steel (ATF Immersion) | Adhesive strength under shear (MPa) | | Cohesive failure rate (CF%) | |
|---|---|---|---|---|
| | ATF, 120°C, 100 hr | ATF, 120°C, 14 days | ATF, 120°C, 100 hr | ATF, 120°C, 14 days |
| Example 1 | 0.82 | 0.69 | 100 | 80 |
| Example 2 | 0.86 | 0.68 | 100 | 80 |
| Example 3 | 0.84 | 0.64 | 90 | 60 |
| Example 4 | 0.61 | 0.43 | 65 | 30 |
| Example 5 | 0.82 | 0.46 | 85 | 40 |
| Example 6 | 0.76 | 0.59 | 90 | 35 |
| Example 7 | 0.73 | 0.54 | 80 | 30 |
| Example 8 | 0.81 | 0.68 | 90 | 70 |
| Example 9 | 0.59 | 0.33 | 70 | 60 |
| Example 10 | 0.74 | 0.53 | 60 | 25 |
| Comparative Example 1 | 0.07 | - | 0 | - |
| Comparative Example 2 | 0.13 | 0.08 | 0 | 0 |
| Comparative Example 3 | 0.31 | 0.26 | 0 | 0 |

From Tables 2 to 6, it is apparent that, in the Comparative Examples in which the composition does not have component (D) specified in the present invention, the adhesive strength and cohesive failure rate for each substrate are markedly lowered due to a contact with water (salt water), whereas the composition of the present invention has high adhesive properties to all the substrates and has high water resistance. Further, it is apparent that, by appropriately controlling the amount of component (D), the composition of the present invention similarly has high adhesive properties to all the substrates and has high water resistance. This tendency is similarly seen in the case of a contact with an oil. Silicone has compatibility with an oil, and therefore there is a concern about swelling with an oil and lowering of the physical properties and adhesive properties due to the additive contained in an oil. However, the composition of the present invention was able to maintain high adhesive properties even in the presence of an oil. As apparent from the above, the composition of the present invention is excellent also as an adhesive for use in the internal structure of an automobile in which the adhesive is highly likely to be in contact with an oil at a high temperature.

### INDUSTRIAL APPLICABILITY

The composition of the present invention is a moisture curable silicone composition having not only high adhesive properties but also excellent water resistance, resistance to salt water, and oil resistance, and, in the present invention, there is provided a moisture curable silicone composition having excellent adhesive properties for various substrates that are more likely to be in contact with water or an oil.

## Claims

1. A moisture curable silicone composition comprising:
(A) a polyorganosiloxane having per molecule two or more hydroxyl groups or hydrolyzable groups bonded to a silicon atom;
(B) a siloxane compound having per molecule two or more -OR² groups (wherein R² each occurrence is independently a hydrogen atom or a monovalent organic group) bonded to a silicon atom;
(C) a condensation catalyst;
(D) a silicon adhesion imparting agent (excluding a compound corresponding to the component (A) or (B)) which is a compound having per molecule at least one adhesion imparting functional group selected from the group consisting of an aromatic hydrocarbon-containing group, an epoxy group-containing group, and a linear, branched, or cyclic aliphatic unsaturated hydrocarbon group, and having per molecule at least one heteroatom in addition to the adhesion imparting functional group; and
(E) an inorganic filler,
wherein the amount of the component (D) contained is 0.05 to 20 parts by mass, relative to 100 parts by mass of the component (A).

2. The moisture curable silicone composition according to claim 1, wherein the component (D) is at least one member selected from the group consisting of a sulfur compound, a nitrogen compound, and a phosphorus compound.

3. The moisture curable silicone composition according to claim 1, wherein the component (D) is an organosilicon compound having at least one SiR⁵₃₋ₙ(OR⁵)ₙ group (wherein R⁵ is a monovalent hydrocarbon group having no aliphatic unsaturated bond, and n is 1, 2, or 3) and/or a partial hydrolysis condensation product thereof.

4. The moisture curable silicone composition according to claim 3, wherein the component (D) further has at least one group selected from the group consisting of an aromatic hydrocarbon-containing group, an epoxy group-containing group, and an aliphatic unsaturated hydrocarbon group.

5. The moisture curable silicone composition according to any one of claims 1 to 4, wherein the component (A) comprises a linear polyorganosiloxane having both ends capped by an R^{a}₃₋ₘR³ₘSiO_{1/2} unit and having an intermediate unit comprised of an R³₂SiO_{2/2} unit (wherein R^{a} is a hydroxyl group or a hydrolyzable group, R³ is a hydrogen atom or a monovalent hydrocarbon group having no aliphatic unsaturated bond, and m is 0, 1, or 2).

6. The curable composition according to any one of claims 1 to 4, wherein the component (B) comprises a compound represented by the following formula:
R¹ₙSi(OR²)₄₋ₙ
wherein R¹ each occurrence is independently a substituted or unsubstituted monovalent hydrocarbon group having 1 to 12 carbon atoms,
R² each occurrence is independently a hydrogen atom or an alkyl group or alkenyl group having 1 to 12 carbon atoms and optionally having a -C(=O)-, -NR'-, or - N=C(R')- group at an end thereof, and optionally having one or more hydrogens replaced by a halogen or an alkoxy group (wherein R' is an alkyl group having 1 to 6 carbon atoms, and optionally forms a ring together with a carbon portion of the alkyl group or alkenyl group), and
n is 0, 1, or 2,
or a partial hydrolysis condensation product thereof.
